(19) Europäisches Patentamt / European Patent Office / Office européen des brevets

(11) **EP 4 435 995 B1**

(12) **EUROPEAN PATENT SPECIFICATION**

(45) Date of publication and mention
of the grant of the patent:
**06.05.2026  Bulletin 2026/19**

(21) Application number: **22900122.7**

(22) Date of filing: **14.10.2022**

(51) International Patent Classification (IPC):
**H02J 7/00** *(2026.01)*

(52) Cooperative Patent Classification (CPC):
**H02J 7/00; H02J 7/04; H02J 7/865; H02J 7/92; H02J 7/94; H02J 7/975; H02J 7/977;** Y02E 60/10

(86) International application number:
**PCT/CN2022/125439**

(87) International publication number:
**WO 2023/098317 (08.06.2023 Gazette 2023/23)**

(54) **CHARGING CONTROL METHOD AND APPARATUS, AND ELECTRONIC DEVICE**

LADESTEUERUNGSVERFAHREN UND -VORRICHTUNG SOWIE ELEKTRONISCHE
VORRICHTUNG

PROCÉDÉ ET APPAREIL DE COMMANDE DE CHARGE, ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **01.12.2021  CN 202111459619**

(43) Date of publication of application:
**25.09.2024  Bulletin 2024/39**

(73) Proprietor: **ZTE Corporation**
**Shenzhen, Guangdong 518057 (CN)**

(72) Inventor: **XIAO, Jianhua**
**Shenzhen, Guangdong 518057 (CN)**

(74) Representative: **Zoli, Filippo**
**Brunacci & Partners S.r.l.**
**Via Pietro Giardini, 625**
**41125 Modena (IT)**

(56) References cited:
**CN-A- 107 054 145      CN-A- 107 054 145
CN-A- 108 092 360      CN-A- 111 404 228
JP-A- 2020 013 726     JP-A- 2021 097 555
US-B2- 8 405 348**

• GUANQIAN JIANG, LI ZHIYONG, HU YUNHUA,
WEI YONGQIANG: "Study and Design of Lithium-
ion Battery a Mmart Charge Controller",
SCIENCE AND TECHNOLOGY INNOVATION
HERALD, vol. 2019, no. 20, 11 July 2013
(2013-07-11), pages 56 - 57, XP093070160

## Description

### TECHNICAL FIELD

The present disclosure relates to the technical field of charging, and more particularly, to a charging control method and apparatus, and an electronic device.

### BACKGROUND

With the advancement of technology, terminal device products, such as mobile phones and tablet computers, have significantly improved in terms of charging speed and performance. High-power chargers, high-performance Central Processing Units (CPU) and Liquid Crystal Displays (LCD) with high refresh rates and other hardware are more widely applied to terminal device products. While these technologies enhance the user experience, they also introduce significant challenges related to power supply and heat generation. For example, when the power of a terminal device is very low, if a user needs to continue to use the terminal device at a high intensity, the user can only plug in the charger to maintain the power. One example is the patent publication CN 107 054 145. In such high-power-consumption charging scenario, not only the normal power supply of a terminal device system is affected, but also a phenomenon of rapid heat production of the terminal device caused by the superposition of charging temperature rise and high-load temperature rise appears, which leads to issues such as CPU frequency limitation, system jamming, significantly affecting the user experience.

### SUMMARY

The following is an overview of the subject described in detail in the description. This overview is not intended to limit the scope of protection of the claims.

Embodiments of the present disclosure provide a charging control method and apparatus, and an electronic device.

In accordance with a first aspect of the present disclosure, an embodiment provides a charging control method, including: acquiring a system power consumption value of a terminal device; determining that the terminal device is charged by a charger and is in a high-load operating state, determining a required charging power of a battery according to a temperature-controlled charging current value of the battery, and determining a charging parameter according to the system power consumption value and the required charging power, the temperature-controlled charging current value is a maximum current value of the battery under the condition of charging without heating; and determining a charging output power of the charger according to the charging parameter, such that the charger charges the terminal device according to the charging output power.

In accordance with a second aspect of the present disclosure, an embodiment provides a charging control apparatus, including: an acquisition module configured to acquire a system power consumption value of a terminal device; a determination module configured to determine that the terminal device is charged by a charger and is in a high-load operating state, determine a required charging power of a battery according to a temperature-controlled charging current value of the battery, and determine a charging parameter according to the system power consumption value and the required charging power, the temperature-controlled charging current value is a maximum current value of the battery under the condition of charging without heating; and a control module configured to determine a charging output power of the charger according to the charging parameter, such that the charger charges the terminal device according to the charging output power.

In accordance with a third aspect of the present disclosure, an embodiment provides an electronic device, including: a memory, a processor, and a computer program stored in the memory and executable by the processor which, when executed by the processor, causes the processor to implement the charging control method provided by the embodiment of the present disclosure.

In accordance with a fourth aspect of the present disclosure, an embodiment provides a computer-readable storage medium, storing a computer program which, when executed by a processor, causes the processor to implement the charging control method provided by the embodiment of the present disclosure.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims, and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.

Fig. 1 is a flowchart of a charging control method provided by an embodiment of the present disclosure;

Fig. 2 is a flowchart showing an implementation process of another embodiment of S2000 in Fig. 1;

Fig. 3 is a flowchart showing an implementation process of another embodiment of S2000 in Fig. 1;

Fig. 4 is a flowchart showing an implementation process of another embodiment of S2200 in Fig. 2;

Fig. 5 is a flowchart showing an implementation process of another embodiment of S2210 in Fig. 4;

Fig. 6 is a flowchart showing an implementation process of another embodiment of S2220 in Fig. 4;

Fig. 7 is a flowchart showing an implementation process of another embodiment of step S2400 in Fig. 2;

Fig. 8 is a schematic structural diagram of a charging control apparatus provided by an embodiment of the present disclosure; and

Fig. 9 is a schematic structural diagram of an electronic device provided by an embodiment of the present disclosure.

## DETAILED DESCRIPTION

To make the objects, technical schemes and advantages of the present disclosure clear, the present disclosure will be further described in detail in conjunction with the drawings and embodiments. It should be understood that the embodiments described here are only used to illustrate the present disclosure, and are not intended to limit the present disclosure.

It should be understood that in the description of the embodiments of the present disclosure, the terms such as "first", "second" and the like used herein are merely used for distinguishing technical features, and are not intended to indicate or imply relative importance, or implicitly point out the number of the indicated technical features, or implicitly point out a precedence order of the indicated technical features. The term "at least one" means one or more, and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, or c may represent a, b, c, "a and b", "a and c", "b and c", or "a, b, and c", where a, b, and c may be singular or plural.

Furthermore, the technical features involved in the various embodiments of the present disclosure described below may be combined with each other if not in collision.

The charging control method involved in the embodiments of the present disclosure is based on a Programmable Power Supply (PPS) protocol. To adapt to charging demands of different terminal devices in different application scenarios, it is necessary to adjust output power of a charger to achieve functions such as battery protection, terminal device temperature control, etc. In practical application, with the continuous improvement of charger performance and gradual increase in power consumption of a single component of a terminal device, higher requirements have been put forward for charging control due to terminal device performance and charging efficiency. Therefore, the adoption of a scientific and reasonable charging control method allows the terminal device to exert its performance more effectively in a charging state, especially when the terminal device is in high-load operation, which can not only ensure that the performance of the terminal device is fully fulfilled, but also effectively improve the charging efficiency of the terminal device. For example, in a classic scenario of charging control where a battery of a terminal device runs low, if it is necessary to continue to use the terminal device at a high intensity, a charger must be plugged in to maintain the power level. In this high-power-consumption charging scenario, a phenomenon of rapid heating of the terminal device often occurs due to the superposition of charging temperature rise and high-load temperature rise.

To ensure the safety of terminal device charging, the existing conventional charging control method includes: when charging, calculating a charging current required by a battery mainly according to the temperature, power level and other factors of the battery, and setting a charger output current according to the charging demand of the battery for charging. This control method has the problem that when a system load is large, the overall temperature of the system may rise rapidly due to the superposition of processor heating and charging heating. After the temperature rises, various protective actions are usually triggered to achieve the purpose of cooling, for example, reducing CPU main frequency, reducing LCD brightness, reducing charging current, etc. However, these protective actions may seriously limit the performance of the terminal device and affect the user experience.

To ensure the performance of mobile phones in the charging state, some mobile phone manufacturers provide a control mode of separate charging to solve the problem of charging heating when using a mobile phone at low level and high load. When this mode is turned on, after the charger is plugged in, the charger does not charge the battery at all, but only provides power for system consumption. This method can really achieve temperature control on the battery while ensuring the performance of the mobile phone. However, this solution has the problem that under high load, the charger is unable to increase the battery level because the battery cannot be charged all the time, such that the battery is in a state of low level and is then damaged. In addition, a user is unable to use the terminal device without the charger, which brings a lot of inconvenience to the user.

In view of the above, embodiments of the present disclosure provide a charging control method and apparatus, an electronic device, and a computer-readable storage medium. A required charging power of a battery is determined according to a temperature-controlled charging current value of the battery; a charging parameter is determined according to a system power consumption value and the required charging power; and a charging output power of a charger is determined according to the charging parameter, such that the charger charges a terminal device according to the charging output power, to effectively alleviate the contradiction between system power supply and battery charging in a high-load operating state, maintain stable power supply and temperature control for the terminal device, and ensure the charging stability of the terminal device while ensuring the user experience.

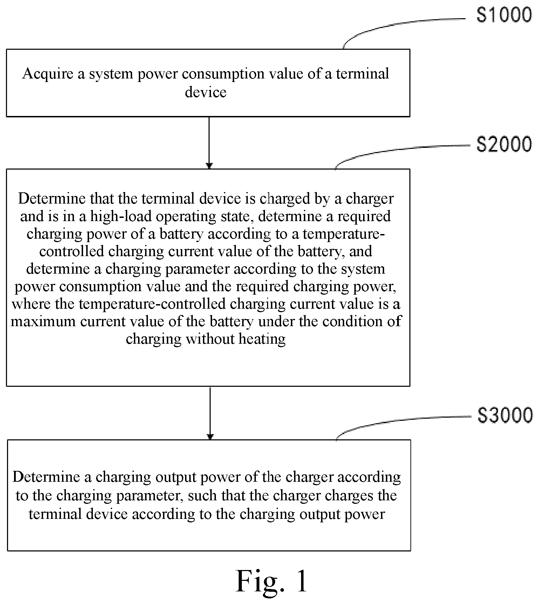

Referring to Fig. 1, Fig. 1 shows a flowchart of a charging control method provided by an embodiment of the present disclosure. As shown in Fig. 1, the charging control method in the embodiment of the present disclosure includes the following steps.

In a step of S1000, a system power consumption value of a terminal device is acquired.

Power consumption values of all main components can be directly acquired by means of existing terminal device detection software, and by collecting and calculating the power consumption values of the main power-consuming components of the terminal device regularly, the system power consumption value of the terminal device can be obtained by calculating a sum of these values. Acquiring power consumption values of all components of the terminal device by means of detection software belongs to the existing technology, which will not be repeated here.

For example, main components of a mobile terminal device include a display screen, a CPU, a sensor, a camera, a speaker, etc. The display screen produces heat and light during operation, especially that the resolution of display screens of most current mobile terminal devices is above 1080P, so a large amount of power may be consumed during long-term use. In addition, all operations of the mobile terminal device are controlled by the CPU, and a performance index of the CPU directly determines a system performance index of the mobile terminal device. The CPU has the following basic functions: data communication, resource sharing, distributed processing and providing system reliability. Therefore, the display screen and CPU are the most power-consuming components of the mobile terminal device under the condition of normal use of a mobile phone. Of course, in some specific scenarios, the power consumption of other components can also account for most of the system power consumption of the mobile terminal device. For example, in the case of shooting with a camera for a long time and playing music with a speaker for a long time, the camera and the speaker become the main power-consuming components. By calculating the sum of power consumption values thereof, the system power consumption value of the terminal device can be acquired.

In practical application, to facilitate real-time calculation of the system power consumption value of the terminal device, the system power consumption value of the terminal device can be obtained by subtracting an actual charging power of the battery from an input power of the charger. The calculation formula is as follows:

$$P_{sys} = U_{in} * I_{in} - U_{bat} * I_{bat}$$

where $P_{sys}$ is the system power consumption value of the terminal device, $U_{in}$ is an input voltage value of the charger, $I_{in}$ is an input current value of the charger, $U_{bat}$ is an input voltage value of the battery, and $I_{bat}$ is a battery charging current.

In a step of S2000, it is determined that the terminal device is charged by a charger and is in a high-load operating state, a required charging power of a battery is determined according to a temperature-controlled charging current value of the battery, and a charging parameter is determined according to the system power consumption value and the required charging power, where the temperature-controlled charging current value is a maximum current value of the battery under the condition of charging without heating.

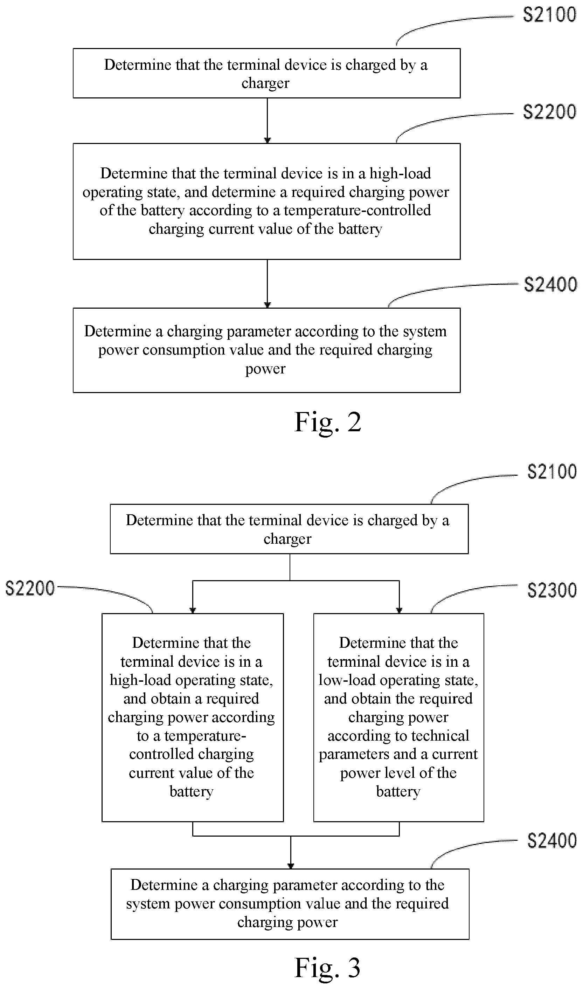

Referring to Fig. 2 and Fig. 3, Fig. 2 and Fig. 3 are each a schematic diagram showing an implementation process of the S2000. As shown in Fig. 2 and Fig. 3, S2000 at least includes the following steps.

In a step of S2100, it is determined that the terminal device is charged by a charger.

The terminal device can judge whether the terminal device is connected to a power supply through the charger by detecting an input voltage value and an input current value of a charging interface. For example, the terminal device can judge whether the battery is charged by the charger by collecting a state of the battery through a charging chip, for example, whether the battery has a charging voltage or a charging current and whether the level of the battery is in an increasing state, and then judge that the terminal device is connected with the power supply through the charger which supplies power to the components of the terminal device and charges the battery through the charging chip.

In a step of S2200, it is determined that the terminal device is in a high-load operating state, and a required charging power of the battery is determined according to a temperature-controlled charging current value of the battery.

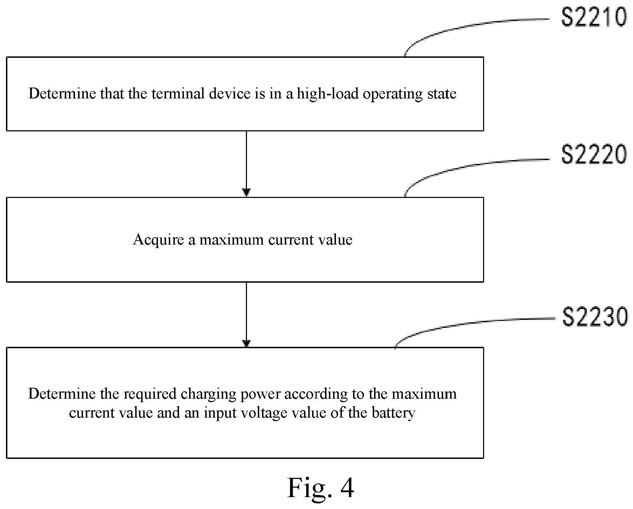

Referring to Fig. 4, Fig. 4 is a schematic diagram showing an implementation process of S2200. As shown in Fig. 4, S2200 at least includes the following steps.

In a step of S2210, it is determined that the terminal device is in a high-load operating state.

The high-load operating state means that the terminal device is in a high energy consumption state due to a high resource utilization of the main components. For example, when the mobile terminal device runs multiple application programs or runs programs that occupy a lot of CPU and memory resources, such as massive games, cameras, image processing software, etc., the mobile terminal device is in a state of high energy consumption and large heat generation. When the terminal device is in a high-load operating state, to prevent core components from being damaged due to an over-high temperature, protective mechanisms are generally set, for example, activating heat dissipation components, limiting CPU output performance, reducing display screen brightness, and forcibly shutting down, so as to control the temperature of the terminal device within a safety range.

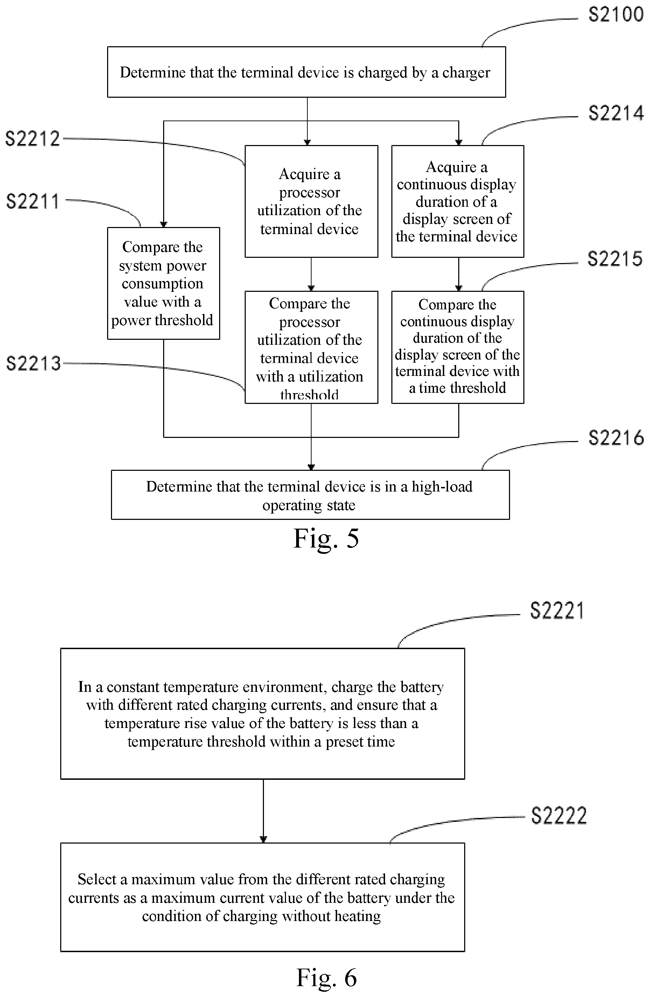

Referring to Fig. 5, Fig. 5 is a schematic diagram showing an implementation process of S2210. As shown in Fig. 5, S2210 at least includes the following steps.

In a step of S2211, the system power consumption value is compared with a power threshold.

The power threshold is a preset value, and a value of the time threshold indicates whether the current terminal device is in a high-load operating state. Therefore, for terminal devices with different hardware configurations, software configurations and operating environments, the power thresholds of the terminal devices may need to be adjusted and matched such that the power thresholds can accurately indicate the operating states of the terminal devices. For example, a power threshold of a mobile terminal device is set to 8 W, and in the case where the terminal device is charged by a charger, when the current system power consumption value is greater than 8 W, it is determined that the mobile terminal device is in a high-load operating state.

In a step of S2216, it is determined that the terminal device is in a high-load operating state.

When the system power consumption value is greater than the power threshold, that is, the input power of the charger minus the actual charging power of the battery is greater than the power threshold of the terminal device, which is because the system power consumption value takes up an increased proportion of the input power of the charger due to the fact that the main components of the terminal device are in a high energy consumption state, it is determined that the terminal device is in a high-load operating state.

In another embodiment, S2210 at least includes the following steps.

In a step of S2212, a processor utilization of the terminal device is acquired.

The processor utilization refers to a rate of processor resources occupied by programs run by the terminal device, which indicates a situation of the programs run by the terminal device at a certain time point. A higher processor utilization indicates that more programs are run by the terminal device at this time point, and a lower processor utilization indicates that less programs are run by the terminal device at this time point. Thus, the processor utilization may directly reflect the operating state of the terminal device. By means of the existing terminal device detection software, the processor utilization can be acquired regularly and accurately, and then the current operation of the terminal device can be judged in time.

In a step of S2213, the processor utilization of the terminal device is compared with a utilization threshold.

The utilization threshold is also a preset value, and a value of the utilization threshold indicates whether the current terminal device is in a high-load operating state. Therefore, for terminal devices with different hardware configurations, software configurations and operating environments, the utilization thresholds of the terminal devices may need to be adjusted and matched such that the utilization thresholds can accurately indicate the operating states of the terminal devices. For example, an utilization threshold of a mobile terminal device is set to 30%, and in the case where the terminal device is charged by a charger, when the current processor utilization of the terminal device is greater than 30%, it is determined that the mobile terminal device is in a high-load operating state.

In a step of S2216, it is determined that the terminal device is in a high-load operating state.

When the processor utilization of the terminal device is greater than the utilization threshold, the processor is in a high energy consumption state. For example, all operations of the mobile terminal device are controlled by the processor, and a performance index of the processor directly determines a system performance index of the mobile terminal device. Therefore, when the processor utilization of the terminal device is greater than 30%, it indicates that both the processor and other core components are in a high energy consumption state, and then it is determined that the terminal device is in a high-load operating state.

In another embodiment, step S2210 at least includes the following steps.

In a step of S2214, a continuous display duration of a display screen of the terminal device is acquired.

The continuous display duration of the display screen of the terminal device is a time period during which the display screen run by the terminal device is in a continuously operating state, which indicates that the terminal device is in an operating state within this time period. Especially with the popularization of LCD screens with high refresh rate, the proportion of energy consumption of a display screen in a mobile terminal device is increasing. A longer continuous display duration of the display screen of the terminal device indicates that the terminal device operates continuously and consumes power within this time period. Therefore, a value of the continuous display duration of the display screen can directly reflect the operating state of the terminal device. With the existing terminal device detection software, the continuous display duration of the display screen can be acquired in real time, and the current operation of the terminal device can be judged in time.

In a step of S2215, the continuous display duration of the display screen of the terminal device is compared with a time threshold.

The time threshold is also a preset value, and a value of the time threshold indicates whether the current terminal device is in a high-load operating state. Therefore, for terminal devices with display screens having different resolutions and different operating environments, the time thresholds of the terminal devices may need to be adjusted and matched such that the time thresholds can accurately indicate the operating states of the terminal devices. For example, a time threshold of a mobile terminal device is set to 30 min, and in the case where the terminal device is charged by a charger, when the current continuous display duration of the display screen of the terminal device is more than 30 min, it is determined that the mobile terminal device is in a high-load operating state.

In a step of S2216, it is determined that the terminal device is in a high-load operating state.

When the continuous display duration of the display screen of the terminal device is greater than the time threshold, the terminal device is in a high-load operating state. For example, the energy consumption of the display screen of the mobile terminal device accounts for a considerable proportion of the system power consumption value of the terminal device, so the continuous display duration of the display screen directly determines an energy consumption value of the mobile terminal device. Therefore, when the continuous display duration of the display screen is greater than 30 min, it indicates that both the display screen and the mobile terminal device are in a high energy consumption state, and it is then determined that the terminal device is in a high-load operating state.

In practical application, in order to improve the timeliness and accuracy of judging whether the terminal device is in a high-load operating state, one or more different conditions in the above steps S2211, S2213 and S2215 may be taken into consideration for judgement, that is, only if at least one of the conditions that the system power consumption value is greater than the power threshold, the processor utilization of the terminal device is greater than the utilization threshold, and the continuous display duration of the display screen of the terminal device is greater than the time threshold is met, it can be determined that the terminal device is in a high-load operating state.

In addition to using the system power consumption value, the processor utilization of the terminal device and the continuous display duration of the display screen of the terminal device in S2210 as judgment basis for determining whether the terminal device is in a high-load operating state, other operating parameters of the terminal device may also be used for judgment. For example, operating parameters, such as an operating memory utilization of the terminal device and a current temperature of the CPU of the terminal device may also be used as reference indexes to judge whether the terminal device is in a high-load operating state, and the judgment process is consistent with that described in the S2210, which will not be repeated here.

In a step of S2220, a maximum current value is acquired.

Referring to Fig. 6, Fig. 6 is a schematic diagram showing an implementation process of S2220. As shown in Fig. 6, S2220 at least includes following steps.

In a step of S2221, in a constant temperature environment, the battery is charged with different rated charging currents, and it is ensured that a temperature rise value of the battery is less than a temperature threshold within a preset time.

Because the performance of the battery is relatively stable, the temperature rise value of the battery may be controlled within a certain range when a certain charging current is input, such that the temperature rise of the battery can be effectively decelerated while ensuring the charging efficiency of the battery, and the influence on other components of the terminal device caused by rapid temperature rise of the battery in the process of charging can be avoided.

To ensure the influence of the rated charging currents on the temperature of the battery, the process of acquiring the maximum current value may need to be carried out in a constant temperature environment, for example, performing a charging test in a constant temperature laboratory. For example, in the constant temperature laboratory, a current room temperature is set to 25°C, a preset time is set to 30 min, and a temperature threshold is set to 1°C. The battery is charged with a rated charging current $I_{test}$ for 30 min, and battery temperature values are collected and recorded. If the battery temperature rises less than 1°C within 30 min, a current value of the current $I_{test}$ is recorded and taken as a reference value of the temperature-controlled charging current value. The rated charging current is increased to repeat the above process of charging, and multiple rated charging currents $I_{test}$ that meet the temperature control condition are recorded.

In a step of S2222, a maximum value is selected from the different rated charging currents as a maximum current value of the battery under the condition of charging without heating.

A maximum value $I_{max}$ is selected from the multiple rated charging currents $I_{test}$ that meet the temperature control condition as the temperature-controlled charging current value. That is, when the charging current of the battery is $I_{max}$, the temperature rise value of the battery is less than the temperature threshold while ensuring the charging efficiency of the battery, such that the temperature of the battery is controlled within a certain range, and a situation where the temperature of the battery and the terminal device is too high during charging, which affects the safety of the battery and the performance of the terminal device, is avoided.

In a step of S2230, the required charging power is determined according to the maximum current value and an input voltage value of the battery.

In the process of charging, because the input voltage value $U_{bat}$ of the battery changes with the change of the input voltage value $U_{in}$ of the charger and the system power consumption value $P_{sys}$ of the terminal device, it is necessary to calculate the current required charging power according to the current input voltage value $U_{bat}$ of the battery and the temperature-controlled charging current value. The calculation formula is as follows:

$$P_{bat} = U_{bat} * I_{\max}$$

where $P_{bat}$ is the current required charging power, and $I_{\max}$ is the temperature-controlled charging current value of the battery.

In a step of S2300, it is determined that the terminal device is in a low-load operating state, and the required charging power is obtained according to technical parameters and a current power level of the battery.

The low-load operating state means that the terminal device is in a low energy consumption state due to the low resource utilization of the main components. For the process of determining that the terminal device is in a low-load operating state, reference may be made to the above step S2210. When the terminal device does not meet the condition of the high-load operating state mentioned above, it can be determined that the terminal device is in a low-load operating state. For example, when the system power consumption value is less than the power threshold, the processor utilization of the terminal device is greater than the utilization threshold, and the continuous display duration of the display screen of the terminal device is less than the time threshold, it can be determined that the terminal device is in a low-load operating state.

When the terminal device is in a low-load operating state, only a small part of a total output power of the charger is consumed because the system power consumption value is small. Therefore, in this case, the charger can fully meet the charging demand of the battery, and provide sufficient charging current and charging voltage for the battery according to the demand, performance, and current power level of the battery. For example, if the battery of the terminal device can support 20 W quick charging, a power demand for the charger is calculated according to the battery state, and a maximum allowable charging power of the battery is calculated to be 20 W according to the specifications and current battery situation of the battery and taken as an output power demand for the charger, without considering the power consumption of the system. In this case, the calculation formula of current required charging power $P_{bat}$ is as follows:

$$P_{bat} = P_{\max}$$

where $P_{\max}$ is a current maximum allowable charging power of the battery.

It belongs to the existing charging control technology to acquire the current ideal battery input voltage value $U_{bat}$ and battery charging current $I_{bat}$ of the battery to enable the charger to dynamically adjust the output power, so as to meet the charging demand of the battery through the specifications and current battery charging situation of the battery, such as the type and capacity of the battery, the current power level of the battery, the temperature of the battery, etc., which will not be repeated here.

In a step of S2400, a charging parameter is determined according to the system power consumption value and the required charging power.

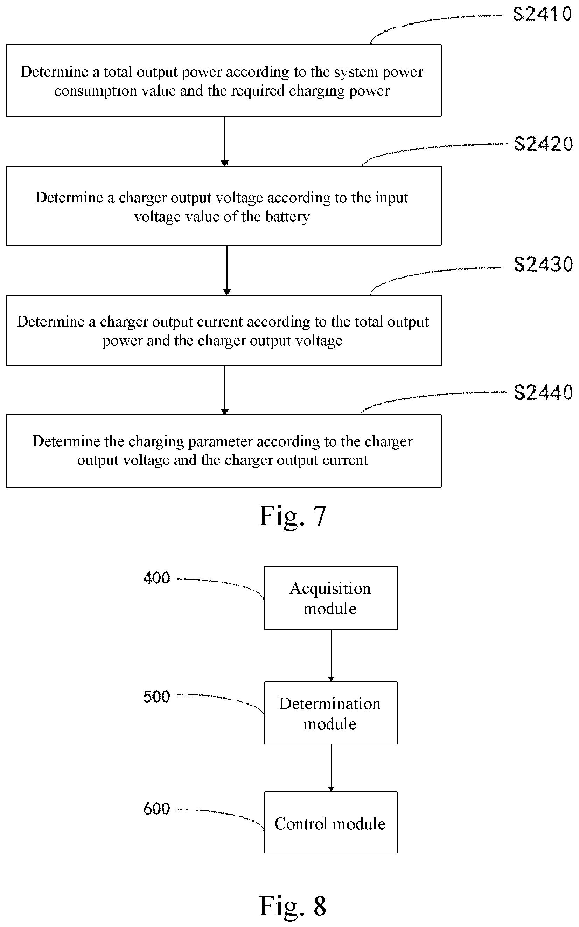

Referring to Fig. 7, Fig. 7 is a schematic diagram showing an implementation process of S2400. As shown in Fig. 7, S2400 at least includes the following steps.

In a step of S2410, the total output power is determined according to the system power consumption value and the required charging power.

In the process during which the charger is connected to the terminal device and charges the terminal device, the charger outputs part of its power to supply power to a peripheral of the terminal device, and another part of its power to charge the battery through a charging chip. Therefore, when the system power consumption value and required charging power are acquired, the total output power $P_{total}$ can be calculated. The calculation formula is as follows:

$$P_{total} = P_{sys} + P_{bat}$$

The total output power is obtained by adding the system power consumption value to the required charging power, which can ensure that the charger provides the power needed by the terminal device system and outputs stable charging power to the battery, avoiding the performance limitation on the terminal device caused by insufficient power supply and overquick heating, and ensuring the charging efficiency of the battery.

In a step of S2420, a charger output voltage is determined according to the input voltage value of the battery.

A nominal voltage of the battery refers to a voltage value that can be maintained for a long time when the battery is in normal use, that is, in a discharging state. When the battery is in a charging state, the input voltage value $U_{bat}$ of the battery increases due to its internal resistance. Therefore, in general, the input voltage value $U_{bat}$ is about 20% higher than the nominal voltage of the battery. In addition, according to actual test data of the battery of the terminal device, because an output end of the charger is connected with the peripheral of the terminal device and the battery respectively, the input voltage value $U_{bat}$ can be guaranteed to be 20% higher than the nominal voltage of the battery, the battery can be allocated with sufficient charging power, and the charging efficiency of the battery can be optimized, only when the charger output voltage is more than twice the nominal voltage of the battery. Therefore, the charger output voltage can be calculated according to a battery performance parameter and the input voltage value $U_{bat}$ of the battery. For example, when the input voltage value and nominal voltage of the battery are both 4 V, the charger output voltage is set to 9 V to ensure that the battery can be allocated with sufficient charging power and ensure the charging efficiency of the battery.

In the process of determining the charging parameter, to ensure that the battery is be in an ideal charging state, the voltage demand of the battery is met first to ensure that the input voltage value $U_{bat}$ of the battery is 20% higher than the nominal voltage of the battery. Then, the input current of the battery is met according to the charging demand.

In a step of S2430, a charger output current is determined according to the total output power and the charger output voltage.

After the total output power and the charger output voltage are determined, the charger output current can be calculated according to a calculation formula that the total output power is equal to the product of the charger output voltage and the charger output current. For example, when the total output power $P_{total}$ is 27 W and the charger output voltage is 9 V, since the charger output current is equal to the total output power $P_{total}$ divided by the charger output voltage, a charger output current of 3 A is obtained.

In a step of S2440, the charging parameter is determined according to the charger output voltage and the charger output current.

After the charger output voltage and the charger output current are obtained, by controlling the charger to output corresponding voltage and current values, the output power of the charger can meet the charging demand of the terminal device, and the temperature control of the battery and the guarantee of the terminal device performance can be realized. In practical application, it is also necessary to compare the total output power with the maximum output power of the charger to ensure that the charger charges the battery within a safety range, so as to avoid potential safety hazards caused by the overload operation of the charger. When it is ensured that both the charger output voltage and the charger output current are within a performance parameter range of the charger, the charging parameter of the charger is determined.

In a step of S3000, charging output power of the charger is determined according to the charging parameter, such that the charger charges the terminal device according to the charging output power.

After the charging parameter is determined, the terminal device sends a charging demand to the charger, and the charger charges the terminal device according to the charger output voltage and the charger output current, thus ensuring that the charger supplies power to the peripheral of the terminal device and charges the battery according to charging output power.

In practical application, the charger dynamically adjusts the charging output power to charge the terminal device by acquiring charging parameters regularly, so as to improve the efficiency and safety of battery charging while ensuring that the peripheral of the terminal device is in a stable power supply state. For example, when terminal device is charged by a charger and is in a high-load operating state, because the current required charging power $P_{bat}$ of the battery is constant, the charging parameter of the charger is mainly adjusted according to the system power consumption value $P_{sys}$ of the terminal device to ensure that the performance of the terminal device is stably fulfilled. However, when the terminal device is charged by a charger and is in a low-load operating state, the charging parameter of the charger is mainly adjusted according to technical parameters and the current power level of the battery to ensure the charging efficiency of the battery.

The charging control method provided by the embodiment of the present disclosure is applicable to various terminal devices, such as mobile phones, tablet computers, unmanned aerial vehicles, automobiles and other various electricity consumption terminal devices that can be charged. The charging control method may be applied to apparatuses, including a power supply, a charging plug, a charging cable, and a terminal device. The power supply may be an ordinary 220 V household power supply or power supplies of other specifications. The charging plug and the charging cable may be separated, or may be combined to form a charger. In addition, the charging control method provided by the embodiment of the present disclosure supports current common quick charger, for example, Quick Charge 3.0 (QC3), USB Power Delivery Specification (USB PD), PPS and other protocols.

Referring to Fig. 8, Fig. 8 is a schematic structural diagram of a charging control apparatus provided by an embodiment of the present disclosure. The whole flow of the charging control method provided by the embodiment of the present disclosure involves the following modules in the charging control apparatus: an acquisition module 400, a determination module 500 and a control module 600.

The acquisition module 400 is configured to acquire a system power consumption value of a terminal device.

The determination module 500 is configured to determine that the terminal device is charged by a charger and is in a high-load operating state, determine a required charging power of a battery according to a temperature-controlled charging current value of the battery, and determine a charging parameter according to the system power consumption value and the required charging power, where the temperature-controlled charging current value is a maximum current value of the battery under the condition of charging without heating.

The control module 600 is configured to determine a charging output power of the charger according to the charging parameter, such that the charger charges the terminal device according to the charging output power.

The information interaction between the modules of the apparatus, execution process and other contents are based on the same concept as the method embodiment of the present disclosure, and thus for its functions and technical effects, reference may be made to the description in the method embodiment, which will not be repeated here.

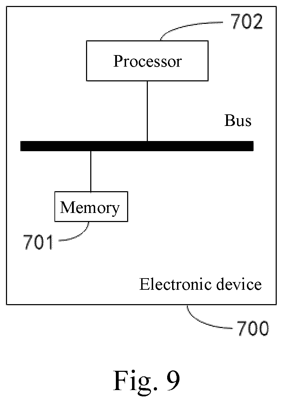

Fig. 9 shows an electronic device 700 provided by an embodiment of the present disclosure. The electronic device 700 includes, but not limited to:

a memory 701 configured to store a program; and

a processor 702 configured to execute the program stored in the memory 701, where the program stored in the memory 701, when executed by the processor 702, causes the processor 702 to implement the above charging control method.

The processor 702 and the memory 701 may be connected by a bus or in other means.

As a non-transient computer-readable storage medium, the memory 701 may be configured to store non-transient software programs and non-transient computer-executable programs, such as the charging control method described in any of the embodiments of the present disclosure. The processor 702 executes the non-transient software programs and instructions stored in the memory 701, to implement the above charging control method.

The memory 701 may include a program storage area and a data storage area. The program storage area may store an operating system, and an application program required by at least one function; and the data storage area may store data used to perform the above charging control method. In addition, the memory 701 may include a high-speed random access memory, and may also include a non-transient memory, such as at least one magnetic disk storage device, a flash memory device, or other non-transient solid state storage device. In some implementations, the memory 701 may include memories remotely located from the processor 702, and these remote memories may be connected to the processor 702 through networks. Examples of the above networks include, but not limited to, the Internet, intranet, a local area network, a mobile communication network and combinations thereof.

The non-transient software programs and instructions required to implement the above charging control method are stored in the memory 701 which, when executed by one or more processors 702, cause the one or more processors 702 to implement the charging control method provided by any one of the embodiments of the present disclosure.

An embodiment of the present disclosure further provides a storage medium, storing a computer-executable instruction which, when executed by a processor, causes the processor to implement the above charging control method.

In an embodiment, the storage medium stores a computer-executable instruction which, when executed by one or more control processors 702, for example, by one processor 702 in the electronic device 700, may cause the one or more processors 702 to implement the charging control method provided by any one of the embodiments of the present disclosure.

The embodiments described above are merely illustrative, and the units described as separate components may or may not be physically separated, that is, may be located in one place, or may be distributed onto multiple network elements. Some or all of the modules may be selected according to actual needs to achieve the purpose of the scheme of this embodiment.

According to an embodiment of the present disclosure, a system power consumption value of a terminal device is acquired; it is determined that the terminal device is in a high-load operating state, and a required charging power is obtained according to a maximum current value of battery charging; a charging parameter is determined according to the system power consumption value and the required charging power; and a charging output power is adjusted according to the charging parameter. The scheme of the embodiment of the present disclosure can maintain stable power supply and temperature control for the terminal device in the process of charging, to ensure the charging stability of the terminal device while guaranteeing the user experience, which is especially suitable for the stable and safe charging of the mobile terminal device under the condition of high-load operation, to adjust the charging output power in real time according to terminal device utilization and charging conditions, and improve the user experience and charging stability.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit.

Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

The above is a detailed description of several embodiments of the present disclosure, but the present disclosure is not limited to the above embodiments. Those having ordinary skills in the art can also make various equivalent modifications or substitutions without departing form the scope of the present application, and these equivalent modifications or substitutions are all included in the scope defined by the claims of the present disclosure.

**Claims**

1. A charging control method, applied to a terminal device, the method comprising:

    acquiring a system power consumption value of the terminal device (S1000);
    determining that the terminal device is charged by a charger and is in a high-load operating state, determining a required charging power of a battery according to a temperature-controlled charging current value of the battery, and determining a charging parameter according to the system power consumption value and the required charging power, wherein the temperature-controlled charging current value is a maximum current value of the battery under a condition of charging without heating (S2000); and
    determining a charging output power of the charger according to the charging parameter, such that the charger charges the terminal device according to the charging output power (S3000).

2. The method of claim 1, wherein determining a required charging power of a battery according to a temperature-controlled charging current value of the battery comprises:

    acquiring the maximum current value (S2220); and
    determining the required charging power according to the maximum current value and an input voltage value of the battery (S2230).

3. The method of claim 2, wherein determining a charging parameter according to the system power consumption value and the required charging power comprises:

    determining a total output power according to the system power consumption value and the required charging power (S2410);
    determining a charger output voltage according to the input voltage value of the battery (S2420);
    determining a charger output current according to the total output power and the charger output voltage (S2430); and
    determining the charging parameter according to the charger output voltage and the charger output current (S2440).

4. The method of claim 2, wherein acquiring the maximum current value (S2220) comprises:

    in a constant temperature environment, charging the battery with different rated charging currents, and ensuring that a temperature rise value of the battery is less than a temperature threshold within a preset time (S2221); and
    selecting a maximum value from the different rated charging currents as a maximum current value of the battery under the condition of charging without heating (S2222).

5. The method of claim 1, wherein determining that the terminal device is charged by a charger and is in a high-load operating state comprises:
determining that the terminal device is in a high-load operating state in response to the system power consumption value being greater than a power threshold.

6. The method of claim 1, wherein determining that the terminal device is charged by a charger and is in a high-load operating state comprises:

    acquiring a processor utilization of the terminal device; and

determining that the terminal device is in a high-load operating state in response to the processor utilization of the terminal device being greater than a utilization threshold.

7. The method of claim 1, wherein determining that the terminal device is charged by a charger and is in a high-load operating state comprises:

acquiring a continuous display duration of a display screen of the terminal device; and
determining that the terminal device is in a high-load operating state in response to the continuous display duration of the display screen of the terminal device being greater than a time threshold.

8. The method of claim 1, further comprising: determining that the terminal device is charged by a charger and is in a low-load operating state, and obtaining the required charging power according to technical parameters and current quantity of electricity of the battery.

9. An electronic device (700), comprising: a memory (701), a processor (702), and a computer program stored in the memory (701) and executable by the processor (702), wherein computer program, when executed by the processor (702), causes the processor (702) to perform the charging control method of any one of claims 1 to 8.

10. A computer-readable storage medium, storing a computer program which, when executed by a processor, causes the processor to perform the charging control method of any one of claims 1 to 8.

11. A computer program which, when executed by a processor, causes the processor to perform the charging control method of any one of claims 1 to 8.

**Patentansprüche**

1. Ladesteuerungsverfahren, angewandt auf eine Endgerätevorrichtung, das Verfahren umfassend:

Erfassen eines Systemleistungsverbrauchswerts der Endgerätevorrichtung (S1000);
Bestimmen, dass die Endgerätevorrichtung von einem Ladegerät geladen wird und in einem Hochlast-Betriebszustand ist, Bestimmen einer erforderlichen Ladeleistung einer Batterie gemäß einem temperaturgesteuerten Ladestromwert der Batterie und Bestimmen eines Ladeparameters gemäß dem Systemleistungsverbrauchswert und der erforderlichen Ladeleistung, wobei der temperaturgesteuerte Ladestromwert ein maximaler Stromwert der Batterie unter einer Ladebedingung ohne Erwärmung ist (S2000); und
Bestimmen einer Ladeausgangsleistung des Ladegeräts gemäß dem Ladeparameter, sodass das Ladegerät die Endgerätevorrichtung gemäß der Ladeausgangsleistung lädt (S3000).

2. Verfahren nach Anspruch 1, wobei ein Bestimmen einer erforderlichen Ladeleistung einer Batterie gemäß einem temperaturgesteuerten Ladestromwert der Batterie Folgendes umfasst:

Erfassen des maximalen Stromwerts (S2220); und
Bestimmen der erforderlichen Ladeleistung gemäß dem maximalen Stromwert und einem Eingangsspannungswert der Batterie (S2230).

3. Verfahren nach Anspruch 2, wobei ein Bestimmen eines Ladeparameters gemäß dem Systemleistungsverbrauchswert und der erforderlichen Ladeleistung Folgendes umfasst:

Bestimmen einer Gesamtausgangsleistung gemäß dem Systemleistungsverbrauchswert und der erforderlichen Ladeleistung (S2410);
Bestimmen einer Ladegerät-Ausgangsspannung gemäß dem Eingangsspannungswert der Batterie (S2420);
Bestimmen eines Ladegerät-Ausgangsstroms gemäß der Gesamtausgangsleistung und der Ladegerät-Ausgangsspannung (S2430); und
Bestimmen des Ladeparameters gemäß der Ladegerät-Ausgangsspannung und dem Ladegerät-Ausgangsstrom (S2440).

4. Verfahren nach Anspruch 2, wobei ein Erfassen des maximalen Stromwerts (S2220) Folgendes umfasst:

in einer Umgebung mit konstanter Temperatur, Laden der Batterie mit verschiedenen Nennladeströmen und Sicherstellen, dass ein Temperaturanstiegswert der Batterie innerhalb einer voreingestellten Zeit weniger ist als ein Temperaturschwellenwert (S2221); und
Auswählen eines Maximalwerts aus den verschiedenen Nennladeströmen als maximalen Stromwert der Batterie unter der Bedingung eines Ladens ohne Erwärmung (S2222).

5. Verfahren nach Anspruch 1, wobei ein Bestimmen, dass die Endgerätevorrichtung von einem Ladegerät geladen wird und in einem Hochlast-Betriebszustand ist, Folgendes umfasst:
Bestimmen, dass die Endgerätevorrichtung in einem Hochlast-Betriebszustand ist, als Reaktion darauf, dass der Systemleistungsverbrauchswert größer ist als ein Leistungsschwellenwert.

6. Verfahren nach Anspruch 1, wobei ein Bestimmen, dass die Endgerätevorrichtung von einem Ladegerät geladen wird und in einem Hochlast-Betriebszustand ist, Folgendes umfasst:

Erfassen einer Prozessorverwendung der Endgerätevorrichtung; und
Bestimmen, dass die Endgerätevorrichtung in einem Hochlast-Betriebszustand ist, wenn die Prozessorverwendung der Endgerätevorrichtung einen Verwendungsschwellenwert überschreitet.

7. Verfahren nach Anspruch 1, wobei ein Bestimmen, dass die Endgerätevorrichtung von einem Ladegerät geladen wird und in einem Hochlast-Betriebszustand ist, Folgendes umfasst:

Erfassen einer kontinuierlichen Anzeigedauer eines Bildschirms der Endgerätevorrichtung; und
Bestimmen, dass die Endgerätevorrichtung in einem Hochlast-Betriebszustand ist, wenn die Dauer der kontinuierlichen Anzeige des Bildschirms der Endgerätevorrichtung größer ist als ein Zeitschwellenwert.

8. Verfahren nach Anspruch 1, ferner umfassend:
Bestimmen, dass die Endgerätevorrichtung von einem Ladegerät geladen wird und sich in einem Niedriglast-Betriebszustand ist, und Bestimmen der erforderlichen Ladeleistung gemäß technischen Parametern und der aktuellen Strommenge der Batterie.

9. Elektronische Vorrichtung (700), umfassend:
einen Speicher (701), einen Prozessor (702) und ein Computerprogramm, das in dem Speicher (701) gespeichert ist und von dem Prozessor (702) ausführbar ist, wobei das Computerprogramm, wenn es von dem Prozessor (702) ausgeführt wird, den Prozessor (702) veranlasst, das Ladesteuerungsverfahren nach einem der Ansprüche 1 bis 8 durchzuführen.

10. Computerlesbares Speichermedium, das ein Computerprogramm speichert, das, wenn es von einem Prozessor ausgeführt wird, den Prozessor veranlasst, das Ladesteuerungsverfahren nach einem der Ansprüche 1 bis 8 durchzuführen.

11. Computerprogramm, das, wenn es von einem Prozessor ausgeführt wird, den Prozessor veranlasst, das Ladesteuerungsverfahren nach einem der Ansprüche 1 bis 8 durchzuführen.

**Revendications**

1. Procédé de gestion de charge, appliqué à un terminal, le procédé comprenant :

l'acquisition d'une valeur de consommation d'énergie du système du dispositif terminal (S1000) ; la détermination que le dispositif terminal est en cours de charge par un chargeur et se trouve dans un état de fonctionnement à forte charge, la détermination d'une puissance de charge requise pour une batterie en fonction d'une valeur de courant de charge régulée en température de la batterie, et la détermination d'un paramètre de charge en fonction de la valeur de consommation d'énergie du système et de la puissance de charge requise, la valeur du courant de charge régulée en température correspondant à une valeur de courant maximale de la batterie dans des conditions de charge sans surchauffe (S2000) ; et
la détermination d'une puissance de sortie de charge du chargeur en fonction du paramètre de charge, de telle sorte que le chargeur charge le terminal selon cette puissance de sortie de charge (S3000).

2. Procédé selon la revendication 1, dans lequel la détermination de la puissance de charge requise d'une batterie en fonction d'une valeur de courant de charge régulée en température de la batterie comprend :

l'acquisition de la valeur maximale du courant (S2220) ; et
la détermination de la puissance de charge requise en fonction de la valeur maximale du courant et de la tension d'entrée de la batterie (S2230).

3. Procédé selon la revendication 2, dans lequel la détermination d'un paramètre de charge en fonction de la valeur de la consommation d'énergie du système et de la puissance de charge requise comprend :

la détermination d'une puissance de sortie totale en fonction de la valeur de la consommation d'énergie du système et de la puissance de charge requise (S2410) ;
la détermination d'une tension de sortie du chargeur en fonction de la valeur de la tension d'entrée de la batterie (S2420) ;
la détermination d'un courant de sortie du chargeur en fonction de la puissance de sortie totale et de la tension de sortie du chargeur (S2430) ; et
la détermination du paramètre de charge en fonction de la tension de sortie et du courant de sortie du chargeur (S2440).

4. Procédé selon la revendication 2, dans lequel l'acquisition de la valeur maximale du courant (S2220) comprend :

dans un environnement à température constante, le chargement de la batterie avec différents courants de charge nominaux, en vérifiant que l'augmentation en température de la batterie reste inférieure à un seuil de température dans un délai prédéfini (S2221) ; et
la sélection d'une valeur maximale parmi les différents courants de charge nominaux comme courant maximal de la batterie dans des conditions de charge sans surchauffe (S2222).

5. Procédé selon la revendication 1, dans lequel la détermination que le terminal est en cours de charge par un chargeur et se trouve dans un état de fonctionnement à forte charge comprend:
la détermination que le dispositif terminal se trouve dans un état de fonctionnement à forte charge lorsque la valeur de la consommation d'énergie du système est supérieure à un seuil de puissance.

6. Procédé selon la revendication 1, dans lequel la détermination que le terminal est en cours de charge par un chargeur et se trouve dans un état de fonctionnement à forte charge comprend :

l'acquisition d'une mesure d'utilisation du processeur du dispositif terminal; et
la détermination que le dispositif terminal se trouve dans un état de fonctionnement à forte charge lorsque l'utilisation du processeur du dispositif terminal est supérieure à un seuil d'utilisation.

7. Procédé selon la revendication 1, dans lequel la détermination que le terminal est en cours de charge par un chargeur et se trouve dans un état de fonctionnement à forte charge comprend:

l'acquisition d'une durée d'affichage continue d'un écran d'affichage du terminal ; et
la détermination que le dispositif terminal se trouve dans un état de fonctionnement à forte charge lorsque la durée d'affichage continu de l'écran du dispositif terminal dépasse un seuil de temps.

8. Procédé selon la revendication 1, comprenant en outre:
la détermination que le dispositif terminal est en cours de charge par un chargeur et se trouve dans un état de fonctionnement à faible charge, et l'obtention de la puissance de charge requise en fonction des paramètres techniques et de la quantité d'électricité actuelle de la batterie.

9. Dispositif électronique (700), comprenant : une mémoire (701), un processeur (702) et un programme informatique stocké dans la mémoire (701) et exécutable par le processeur (702), dans lequel ledit programme informatique, lorsqu'il est exécuté par le processeur (702), amène le processeur (702) à exécuter le procédé de contrôle de charge selon l'une quelconque des revendications 1 à 8.

10. Support de stockage lisible par ordinateur stockant un programme informatique qui, lorsqu'il est exécuté par un processeur, amène le processeur à exécuter le procédé de contrôle de charge selon l'une quelconque des revendications 1 à 8.

11. Programme informatique qui, lorsqu'il est exécuté par un processeur, amène ce dernier à exécuter le procédé de contrôle de charge selon l'une quelconque des revendications 1 à 8.

S1000

Acquire a system power consumption value of a terminal device

S2000

Determine that the terminal device is charged by a charger and is in a high-load operating state, determine a required charging power of a battery according to a temperature-controlled charging current value of the battery, and determine a charging parameter according to the system power consumption value and the required charging power, where the temperature-controlled charging current value is a maximum current value of the battery under the condition of charging without heating

S3000

Determine a charging output power of the charger according to the charging parameter, such that the charger charges the terminal device according to the charging output power

Fig. 1

S2100

Determine that the terminal device is charged by a
charger

S2200

Determine that the terminal device is in a high-load
operating state, and determine a required charging power
of the battery according to a temperature-controlled
charging current value of the battery

S2400

Determine a charging parameter according to the system
power consumption value and the required charging
power

Fig. 2

S2100

Determine that the terminal device is charged by a
charger

S2200

Determine that the
terminal device is in a
high-load operating state,
and obtain a required
charging power according
to a temperature-
controlled charging
current value of the
battery

S2300

Determine that the
terminal device is in a
low-load operating state,
and obtain the required
charging power
according to technical
parameters and a current
power level of the
battery

S2400

Determine a charging parameter according to the
system power consumption value and the required
charging power

Fig. 3

S2210

Determine that the terminal device is in a high-load operating state

S2220

Acquire a maximum current value

S2230

Determine the required charging power according to the maximum current value and an input voltage value of the battery

Fig. 4

S2100

Determine that the terminal device is charged by a charger

S2214

S2212

S2211

Acquire a processor utilization of the terminal device

Acquire a continuous display duration of a display screen of the terminal device

S2215

Compare the system power consumption value with a power threshold

Compare the processor utilization of the terminal device with a utilization threshold

Compare the continuous display duration of the display screen of the terminal device with a time threshold

S2213

S2216

Determine that the terminal device is in a high-load operating state

Fig. 5

S2221

In a constant temperature environment, charge the battery with different rated charging currents, and ensure that a temperature rise value of the battery is less than a temperature threshold within a preset time

S2222

Select a maximum value from the different rated charging currents as a maximum current value of the battery under the condition of charging without heating

Fig. 6

S2410

Determine a total output power according to the system power consumption value and the required charging power

S2420

Determine a charger output voltage according to the input voltage value of the battery

S2430

Determine a charger output current according to the total output power and the charger output voltage

S2440

Determine the charging parameter according to the charger output voltage and the charger output current

Fig. 7

400 — Acquisition module

500 — Determination module

600 — Control module

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107054145